# EUROPEAN PATENT SPECIFICATION

(11) **EP 2 903 711 B1**
(45) Date of publication and mention of the grant of the patent: **28.11.2018**
(21) Application number: 13843702.5
(22) Date of filing: 04.10.2013
(51) Int. Cl.: B01D 15/10, G01N 1/31, B01D 15/22, G01N 1/40

(54) **SOLID PHASE EXTRACTION DISK HOLDER APPARATUS**
HALTEVORRICHTUNG FÜR FESTPHASENEXTRAKTIONSPLATTEN
APPAREIL DE SUPPORT DE DISQUE D'EXTRACTION DE PHASE SOLIDE

(30) Priority: 05.10.2012 US 201261710522 P
(43) Date of publication of application: 12.08.2015
(73) Proprietor: Horizon Technology, Inc., Salem, New Hampshire 03079 (US)
(72) Inventor: JOHNSON, Robert S., Hampstead, New Hampshire 03841 (US)
(74) Representative: Brann AB
(86) International application number: PCT/US2013/063510
(87) International publication number: WO 2014/055898

(56) References cited:
- WO-A1-2012/049480
- US-A- 5 217 619
- US-A- 5 217 619
- US-A- 6 124 012
- US-A- 6 124 012
- US-A1- 2012 037 798
- US-A1- 2012 037 798
- US-B2- 6 803 237
- US-B2- 6 803 237

## Description

### FIELD

This disclosure relates generally to sample testing products and techniques, and more particularly to improved solid phase extraction (SPE) filtration disk holders and methods for their design and manufacture.

### BACKGROUND

In the art which can be described as separation science, means are provided for isolating, separating, and analyzing mixtures of solutions by selective adsorption on materials such as nylon, alumina, silica, bonded silica, polymers, and various other materials. The process is based on differences in the distribution ratios of the components of mixtures between a mutually immiscible mobile and a fixed stationary phase.

Solid phase extraction (SPE) is a laboratory technique for analyzing liquid and mixed liquid/solid samples. The basic objective of such apparatus is to filter the liquid sample and to selectively adsorb compounds or analytes from the liquid portion onto a sorbent. Using the appropriate solvent, the analytes of interest can be subsequently extracted from the sorbent and eluted into a collection vessel.

Publication US 6 124 012 A discloses a solid phase extraction system of particular interest.

### SUMMARY

Conventional solid phase extraction (SPE) filtration disk holder apparatus comprise a mechanism, whereby the SPE disk is clamped, or otherwise firmly held between, an upper and a lower assembly. The lower assembly may consist of a flat annular surface, or basin to hold the disk, while the upper assembly may consist of a reservoir or collar to seal on a top perimeter surface edge area of the SPE disk. By clamping or pinching the upper and lower assemblies on the top and bottom perimeter edge areas of the SPE disk together, and sandwiching against the SPE disk there between, a perimeter of the SPE disk may be held in place, while a center area portion of the disk remains exposed for a sample to pass through.

As vacuum or positive pressure (i.e. pressure greater than atmospheric pressure) may be used to either pull or push a fluid sample (e.g. liquid such as water) through the SPE disk, it is necessary to provide an adequate seal between the disk holder assembly and the SPE disk. Any leakage of the sample, or air around the perimeter of the disk will result in low and inconsistent recoveries.

However, by pinching the SPE disk on the top and bottom perimeter edge areas to ensure a leak tight seal, the area under the pinch point becomes an area where analytes may become trapped, and/or are not removed or extracted during the elution step. With conventional disk holders, this phenomenon is present if either vacuum or positive pressure is used to move the liquid through the SPE disk.

In order to solve this problem and better ensure the best recoveries possible, the apparatus design presented herein provides an SPE disk to be compressed and press fit into the basin, such that the SPE disk forms a seal, particularly a press-fit seal, between the outer edge of the SPE disk, along the thickness of the SPE disk, and the inner basin wall. The SPE disk best suited for this press fit seal, which may also referred to as an interference fit or friction fit seal, should be on the order of 3 to 10 mm thick and of a resilient construction to allow the disk to elastically compress or flex as to be pressed into position, but still remain rigid, particularly as not to substantially deform (e.g. sag) or under the weight of the sample.

With the SPE disk pressed into position, the thickness edge of the SPE disk forms a compression seal with the surrounding basin walls and causes the fluid sample to flow through the SPE disk, and not around the edge of the SPE disk. A basin closure of the apparatus may be threaded onto the basin and be particularly configured not to make contact with the top surface of the SPE disk. An O-ring on the basin closure may provide a seal between the basin and top sealing member. By not making contact with the top surface of the SPE disk, there is no chance of analytes being trapped in a pinched area. Examples of various constructions for holding the SPE disk are provided.

### BRIEF DESCRIPTION OF THE DRAWINGS

The objects, features and advantages of the present invention will be apparent in the following detailed description thereof when read in conjunction with the appended drawings wherein the same reference numerals denote the same or similar parts throughout the several views.
FIG. 1 is an unassembled cross sectional side view of a conventional SPE disk holder apparatus;
FIG 2 is an assembled cross sectional side view of a conventional SPE disk holder apparatus;
FIG 3 is a cross sectional side view of sample flow through the assembled conventional SPE disk holder apparatus of FIGS. 1 and 2, particularly showing a flow of a fluid sample through a membrane of the SPE disk;
FIG 4 is a perspective view of an exemplary SPE disk holder apparatus in accordance with the present disclosure;
FIG 5 is a cross sectional side view of the SPE disk holder of FIG. 4 with a gasket separate from the a top sealing member;
FIG. 6 is the cross sectional side view of the SPE disk holder of FIG. 5 with a gasket joined to the top sealing member; and
FIG. 7 is a cross sectional side view of sample flow through the assembled SPE disk holder apparatus of FIGS. 4-6, particularly showing a flow of a fluid sample through a membrane of the SPE disk.

### DETAILED DESCRIPTION

It may be appreciated that the present disclosure is not limited in its application to the details of construction and the arrangement of components set forth in the following description or illustrated in the drawings. The embodiments herein may be capable of other embodiments and of being practiced or of being carried out in various ways. Also, it may be appreciated that the phraseology and terminology used herein is for the purpose of description and should not be regarded as limiting.

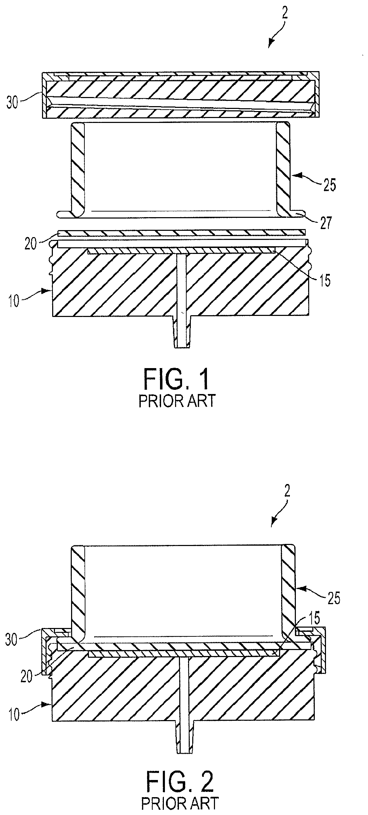

Referring now to FIG. 1, there is shown an unassembled, conventional SPE disk holder apparatus (2) to sandwich a sorbent-impregnated SPE disk (20) between an upper funnel or reservoir (25) and a lower basin (10). In this example, a support screen (15) is inserted into the basin (10), on top of which, is laid the SPE disk (20). The reservoir (25), typically glass with a flat, ground glass foot (27) is laid on top of the upper surface of the SPE disk (20), and the reservoir (25) is secured to the basin (10) with some type of clamp (30). In this example, the clamp (30) is a threaded collar that secures the reservoir (25) to the basin (10).

Referring now to FIG 2, there is shown the assembled components of the SPE disk holder apparatus (2) of FIG. 1, as it would be when in use. As shown, by clamping or pinching the upper reservoir (25) and lower basin (10) on the top and bottom perimeter edge areas of the SPE disk (20) together, and sandwiching against the SPE disk (20) there between, a perimeter of the SPE disk (20) may be held in place, while a center area portion of the disk (20) remains exposed for a sample to pass through.

A fluid sample (e.g. liquid such as water containing analytes) may then be poured into the upper reservoir (25), and a vacuum source applied through the basin (10) to draw the sample through the sorbent of the SPE disk (20). This process may be continued until the entire sample to be filtered has passed through the disk/sorbent (20).

The analytes bound by the sorbents and trapped in solids filtered out by the SPE disk (20) may be collected by elution. The vacuum may be disconnected and a small amount of extraction solvent applied. The procedure may include a soak period, such that the analytes bound by the sorbents within the SPE disk (20), and on any particulate matter, desorb and partition into the extraction solvent. After soaking, vacuum may be reapplied, and the solvent collected.

To ensure the most effective interaction between the sample and the SPE disk (20), the SPE disk (20) must be supported in such a way that all the sample can pass freely through the entire SPE packing (sorbent) material, such that all analytes of interest have the potential to be retained in the SPE (sorbent) packing. It is very important that the disk holder apparatus (2) not interfere and prevent the sample and eluting solvent from reaching and extracting from all areas of the SPE disk (20). With the conventional method of sealing on the edge of the SPE disk (20), this is not possible. Any pinched, or clamped area of the SPE disk (20) becomes an upswept area, that can result in random and inconsistent recoveries.

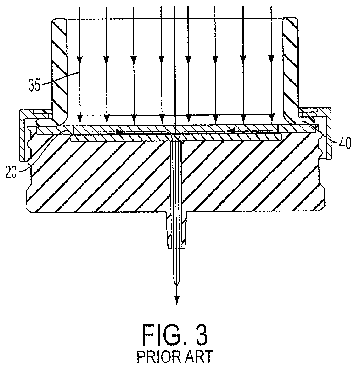

Referring now to FIG 3, there is shown a flow of a sample or eluting solvent (35) through the SPE disk (20). While the sample and eluting solvent can freely pass through the center of the disk, the edges of the disk which are pinched by the basin (10) and the reservoir (25), create an upswept area (40) where sample can be retained, and/or not eluted during the elution step. Once the analytes are in this area, it is very difficult to remove, or extract them from the SPE disk (20). This phenomena can be easily seen, when the fluid sample is tinted with a food color dye, and is filtered through the SPE disk (20). As the sample filters through the SPE disk (20), the food color will be retained by the SPE sorbent. Once the entire sample is through the SPE disk (20), the SPE disk (20) is eluted with the appropriate solvent. The retained food color is eluted off and collected. However, when the disk holder apparatus (2) is disassembled and the SPE disk (20) examined, distinct coloration will be seen around the entire perimeter of the SPE disk (20) - that unswept area (40) which has been clamped between the two sealing surfaces. Any residual color is an indication that traces of the analytes of interest in the sample will be retained in this clamped area, resulting in erroneous reported values.

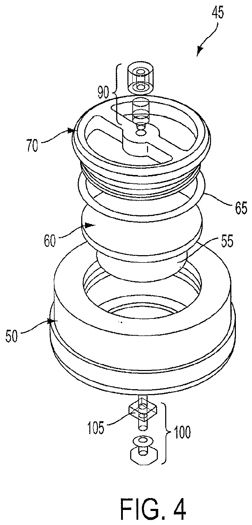

Referring now to FIGS. 4-6, there is shown an unassembled perspective and cross-sectional side views of a sealable solid phase extraction (SPE) filtration disk holder apparatus (45) according to the present disclosure. Generally, the inner diameter of the basin (50) is about 50 mm, and the outer diameter of the basin is 75 mm. However, these dimensions may change based on the diameter of the SPE disk (60) to be used. The basin wall thickness should be sufficiently thick to withstand positive pressure applied to the apparatus (45) without deformation. The depth of the inner cavity (52) of the basin (50) can also vary, but generally may be between 10 mm to 40 mm deep. The depth may vary based on the amount of internal volume desired when working with fluid samples (e.g. dirty/contaminated liquid such as water). The deeper the cavity (52), the more particulate matter can be accumulated on the surface of the SPE disk (60).

A support screen (55) may be placed in the bottom of the basin (50) and the screen (55) may be held in place by a recess (54) in the bottom of the basin (50). An SPE disk (60) is placed into the basin (50), and firmly pressed down on the edge (62) until the SPE disk (60) resides flat on top of the support screen (55). The design of apparatus (45) permits the SPE disk (60) to be press fit into the basin (50), such that the SPE disk (60) forms a friction seal between the outer thickness edge (62) of the SPE disk (60), along the thickness of the SPE disk (60), and the surface (58) of the inner basin wall. The SPE disk (60) best suited for this press fit seal, which may also be known as an interference fit seal, should be on the order of 3 to 10 mm thick and of a resilient construction to allow the SPE disk (60) to elastically compress or flex as to be pressed into position, but still remain rigid, particularly as not to substantially deform (e.g. sag) or under the weight of the sample. It should be understood that a press or interference fit may be created when an outer length dimension of the SPE disk (e.g. outer diameter) is greater than an inner length dimension of the basin wall (e.g. inner diameter), and the outer length dimension of the SPE disk (e.g. outer diameter) is then compressed to equal an inner length dimension of the basin wall (e.g. inner diameter). With the SPE disk (60) pressed into position, the thickness edge (62) of the SPE disk (60) forms a seal with the surrounding basin walls (58) and causes the fluid sample to flow through the SPE disk (60), and not around the edge (62) of the SPE disk (60).

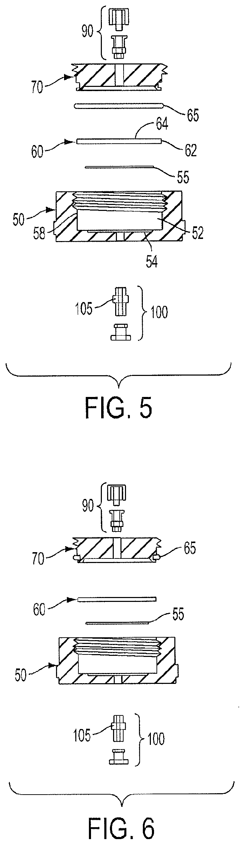

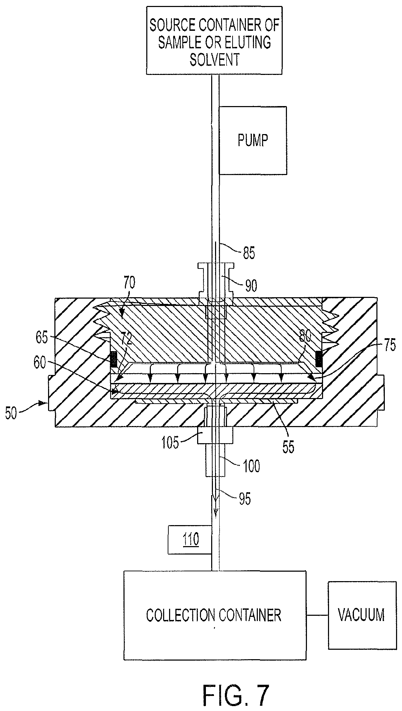

As best shown in FIG. 6 and 7, the basin closure (70) or top seal includes a sealing O-ring (65). The external threads of the basin closure (70) may be is threaded into the internal threads of the basin (50), until the O-ring (65) engages the side walls (58) of the basin (50) and the seal is made. In FIG 5, the O-ring (65) is shown separated from the basin closure (70). In actual use, the O-ring (65) fits into a circular groove (66) on the bottom end of the basin closure (70). When the basin closure (70) is inserted into the basin (50), the O-ring (65) provides a leak tight seal between the two parts, but leaves a fluid passage/gap (75) between the top surface (64) of the SPE disk (60) and the bottom edge (72) of the basin closure (70). As such, the top surface (64) of the SPE disk (60) will completely exposed to the fluid sample or eluting solvent. Luer fittings 90, 100 on the top and bottom of the apparatus (45) allow flexible tubing inlet and outlet fluid connecting lines (85, 95), to be detachably connected, respectively, such that liquid can be pulled by vacuum, or delivered by positive pressure (e.g. peristaltic pump) to the apparatus (45). If only vacuum is to be used with this design, than only the basin (70), the support screen (55), and the SPE disk (60) may be needed. The luer fitting (100) on the bottom of the basin (70) is attached to the appropriate vacuum line, and the sample processed as normal.

The basin may also contain a valve (105) to open and close the fluid passage exiting apparatus (45) such as a solenoid valve, or a clamp (110) (e.g. roller clamp) may be placed on the tubing (95). In this manner, with the valve (105) or clamp (110) closed, the solvent can be driven in to the cavity (52) and SPE disk (60) under pressure, and be forced into all exposed areas of the SPE disk (60). This may better ensure that a thorough extraction takes place. Pressures within the apparatus (45) may be in a range from 1 psi. to 100 psi. with a peristaltic pump, and more particularly be in a range of 1 psi. to 20 psi.

FIG 7 shows the completely assembled apparatus (45). The O-ring (65) is used to provide a leak tight seal between the basin (50) and the basin closure (70). Just below the basin closure (70) is fluid passage/gap (75). Fluid passage/gap (75) can be of any reasonable dimension, so various prefilters, or filtering aids can be used in the apparatus (45). More importantly, the surface (64) of the SPE disk (60) is not pinched or clamped, meaning that there will be no upswept areas where analytes of interest could be trapped and not eluted off the disk (60) during the elution step. Using the same food color test as indicated above, no coloration is left on the SPE disk (60). The flow of sample and eluting solvent through the SPE disk (60) is depicted by the flow arrows (80), and indicate that the flow of liquid is through the entire SPE disk (60).

It should be noted that the size of the cavity (52) containing the SPE disk (60), as well as the size of the fluid passage/gap (75), may be adjusted based on the amount of threaded engagement between the basin closure (70) and the basin (50), such as by rotating the basin closure (70) further into engagement with the basin (50) to decrease the size (height) of the cavity (52) and the fluid passage/gap (75) or vice versa. In this manner, SPE disks (60) of different thickness may be accommodated.

According to one embodiment of the disclosure, a solid phase extraction system may comprise a solid phase extraction disk having a thickness; a solid phase extraction disk holder apparatus; wherein the solid phase extraction disk holder apparatus comprises a basin having a cavity to receive the solid phase extraction disk, the cavity defined by a bottom wall and an adjoining side wall; and wherein the solid phase extraction disk, when in the cavity, compresses against the side wall of the basin to form a seal, particularly a press fit seal, with the side wall of the basin.

According to other embodiments of the disclosure, the press fit seal may be formed along the thickness of the solid phase extraction disk.

According to other embodiments of the disclosure, the cavity of the basin may form a reservoir to contain a fluid sample which is to flow through the solid phase extraction disk; and the seal may inhibit the fluid sample from flowing between the solid phase extraction disk and the side wall of the cavity.

According to other embodiments of the disclosure, the bottom wall of the basin may include a fluid outlet for the fluid sample.

According to other embodiments of the disclosure, a screen may be located between the solid phase extraction disk and the bottom wall of the cavity.

According to other embodiments of the disclosure, the basin may include a recess in the bottom wall to receive the screen

According to other embodiments of the disclosure, a basin closure which covers the cavity may be provided as part of the system.

According to other embodiments of the disclosure, the basin closure may mechanically connect with the basin.

According to other embodiments of the disclosure, the basin closure may mechanically connect with the basin by threaded engagement.

According to other embodiments of the disclosure, the threaded engagement may be formed by external threads of the basin closure engaging with internal threads of the basin.

According to other embodiments of the disclosure, the basin closure may include a fluid inlet for a fluid sample which is to flow through the solid phase extraction disk.

According to other embodiments of the disclosure, a gasket may provide a seal between the basin closure and basin to inhibit leakage of a fluid sample located in the cavity.

According to other embodiments of the disclosure, the gasket may comprise an O-ring gasket located between a side wall of the basin closure and the side wall of the basin.

According to other embodiments of the disclosure, the O-ring gasket may be located in a groove formed in the side wall of the basin closure.

According to other embodiments of the disclosure, the basin closure, when connected to the basin, may be separated from the solid phase extraction disk in the cavity by a separation gap which provides a fluid flow passage for a fluid sample.

According to other embodiments of the disclosure a method of using a solid phase extraction system may comprise inserting a solid phase extraction disk into a cavity of a basin of a solid phase extraction disk holder apparatus such that the solid phase extraction disk compresses against a side wall of the basin and a seal is formed with the side wall of the basin which inhibits a fluid sample from flowing between the solid phase extraction disk and the side wall of the basin.

According to other embodiments of the disclosure, the method may further comprise introducing the fluid sample onto the solid phase extraction disk within the cavity which flows through the solid phase extraction disk to a fluid outlet without flowing between the solid phase extraction disk and the side wall of the basin.

According to other embodiments of the disclosure, the fluid sample flows through the solid phase extraction disk in a presence of at least one of positive pressure and vacuum.

According to other embodiments of the disclosure, the method may further comprise introducing an eluting solvent onto the solid phase extraction disk within the cavity which flows through the solid phase extraction disk to the fluid outlet without flowing between the solid phase extraction disk and the side wall of the basin.

According to other embodiments of the disclosure, the method may further comprise mechanically connecting a basin closure to the basin; forming a seal between the basin closure and the basin; and arranging the basin closure, when connected to the basin, such that a separation gap exists between a top surface of the solid phase extraction disk and the basin closure and the basin closure does not make contact with the top surface of the solid phase extraction disk.

While a preferred embodiment of the present invention(s) has been described, it should be understood that various changes, adaptations and modifications can be made therein without departing from the scope of the appended claims. The scope of the invention(s) should, therefore, be determined not with reference to the above description, but instead should be determined with reference to the appended claims along with their full scope of equivalents. Furthermore, it should be understood that the appended claims do not necessarily comprise the broadest scope of the invention(s) which the applicant is entitled to claim, or the only manner(s) in which the invention(s) may be claimed, or that all recited features are necessary.

## Claims

1. A solid phase extraction system comprising:
a solid phase extraction disk (60) having a thickness;
a solid phase extraction disk (60) holder apparatus (45);
wherein the solid phase extraction disk (60) holder apparatus (45) comprises a basin (50) having a cavity (52) to receive the solid phase extraction disk (60), the cavity (50) defined by a bottom wall and an adjoining side wall of the basin, **characterized in that** an outer length dimension of the solid phase extraction disk (60) is greater than an inner length of the basin wall and the outer length dimension of the solid phase extraction disk (60) is then compressed to equal an inner length dimension of the basin wall such that the solid phase extraction disk (60) forms a press - fit seal between an outer edge (62) of the solid phase extraction disk (60) along the thickness of the solid phase extraction disk (60), and the basin wall without pinching or clamping the surface (64) of the solid phase extraction disk (60) .

2. The solid phase extraction system of claim 1, wherein:
the solid phase extraction disk (60) forms a seal with the side wall of the basin (50).

3. The solid phase extraction system of claim 1, wherein:
the cavity (52) of the basin forms a reservoir to contain a fluid sample which is to flow through the solid phase extraction disk (60); and
the seal inhibits the fluid sample from flowing between the solid phase extraction disk (60) and the side wall of the basin (50).

4. The solid phase extraction system of claim 1 further comprising:
a screen (55) located between the solid phase extraction disk (60) and the bottom wall of the cavity (52).

5. The solid phase extraction system of claim 4 wherein:
the basin includes a recess (54) in the bottom wall to receive the screen (55)

6. The solid phase extraction system of claim 1 further comprising:
a basin closure (70,) which covers the cavity (52).

7. The solid phase extraction system of claim 6 wherein:
the basin closure (70) mechanically connects with the basin (50).

8. The solid phase extraction system of claim 7 wherein:
the basin closure (70) mechanically connects with the basin (50) by threaded engagement.

9. The solid phase extraction system of claim 6 wherein:
the basin closure (70) includes a fluid inlet for a fluid sample which is to flow through the solid phase extraction disk (60).

10. The solid phase extraction system of claim 6 further comprising:
a gasket which provides a seal between the basin closure and basin to inhibit leakage of a fluid sample located in the cavity.

11. The solid phase extraction system of claim 6 wherein:
the basin closure (70), when connected to the basin (50), is separated from the solid phase extraction disk (60) in the cavity by a separation gap (75) which provides a fluid flow passage for a fluid sample.

12. A method of using a solid phase extraction system comprising:
inserting a solid phase extraction disk into a cavity of a basin of a solid phase extraction disk holder apparatus such that the solid phase extraction disk compresses against a side wall of the basin and a seal is formed with the side wall of the basin which inhibits a fluid sample from flowing between the solid phase extraction disk and the side wall of the basin **characterized in that** an outer length dimension of the solid phase extraction disk is greater than an inner length of the basin wall and the outer length dimension of the solid phase extraction disk is then compressed to equal an inner length dimension of the basin wall such that the solid phase extraction disk forms a press - fit seal between an outer edge of the solid phase extraction disk along the thickness of the solid phase extraction disk, and the basin wall without pinching or clamping the surface of the solid phase extraction disk .

13. The method of claim 12 further comprising:
introducing the fluid sample onto the solid phase extraction disk within the cavity which flows through the solid phase extraction disk to a fluid outlet without flowing between the solid phase extraction disk and the side wall of the basin.

14. The method of claim 13 further comprising:
introducing an eluting solvent onto the solid phase extraction disk within the cavity which flows through the solid phase extraction disk to the fluid outlet without flowing between the solid phase extraction disk and the side wall of the basin.

15. The method of claim 12 further comprising:
mechanically connecting a basin closure to the basin;
forming a seal between the basin closure and the basin; and
arranging the basin closure, when connected to the basin, such that a separation gap exists between a top surface of the solid phase extraction disk and the basin closure and the basin closure does not make contact with the top surface of the solid phase extraction disk .

## Patentansprüche

1. Festphasenextraktionssystem, Folgendes umfassend:
eine Festphasenextraktionsplatte (60), die eine Stärke aufweist;
eine Haltevorrichtung (45) für Festphasenextraktionsplatten (60);
wobei die Haltevorrichtung (45) für Festphasenextraktionsplatten (60) ein Becken (50) umfasst, das einen Hohlraum (52) aufweist, um die Festphasenextraktionsplatte (60) aufzunehmen, wobei der Hohlraum (50) durch eine untere Wand und eine angrenzende Seitenwand des Beckens definiert ist, **dadurch gekennzeichnet, dass** eine Außenabmessung der Festphasenextraktionsplatte (60) größer ist als eine Innenlänge der Beckenwand und die Außenabmessung der Festphasenextraktionsplatte (60) dann komprimiert wird, um einer Innenabmessung der Beckenwand zu entsprechen, sodass die Festphasenextraktionsplatte (60) eine Presssitzabdichtung zwischen einer Außenkante (62) der Festphasenextraktionsplatte (60) entlang der Stärke der Festphasenextraktionsplatte (60) und der Beckenwand bildet, ohne die Fläche (64) der Festphasenextraktionsplatte (60) zusammenzudrücken oder einzuklemmen.

2. Festphasenextraktionssystem nach Anspruch 1, wobei:
die Festphasenextraktionsplatte (60) eine Abdichtung mit der Seitenwand des Beckens (50) bildet.

3. Festphasenextraktionssystem nach Anspruch 1, wobei:
der Hohlraum (52) des Beckens einen Behälter zum Aufnehmen einer Fluidprobe bildet, die durch die Festphasenextraktionsplatte (60) fließen soll; und
die Abdichtung die Fluidprobe daran hindert, zwischen die Festphasenextraktionsplatte (60) und die Seitenwand des Beckens (50) zu fließen.

4. Festphasenextraktionssystem nach Anspruch 1, ferner Folgendes umfassend:
ein Sieb (55), das sich zwischen der Festphasenextraktionsplatte (60) und der unteren Wand des Hohlraums (52) befindet.

5. Festphasenextraktionssystem nach Anspruch 4, wobei:
das Becken eine Aussparung (54) in der unteren Wand beinhaltet, um das Sieb (55) aufzunehmen.

6. Festphasenextraktionssystem nach Anspruch 1, ferner Folgendes umfassend:
einen Beckenverschluss (70), der den Hohlraum (52) abdeckt.

7. Festphasenextraktionssystem nach Anspruch 6, wobei:
der Beckenverschluss (70) sich mechanisch mit dem Becken (50) verbindet.

8. Festphasenextraktionssystem nach Anspruch 7, wobei:
der Beckenverschluss (70) sich über einen Gewindeeingriff mechanisch mit dem Becken (50) verbindet.

9. Festphasenextraktionssystem nach Anspruch 6, wobei:
der Beckenverschluss (70) einen Fluideinlass für eine Fluidprobe beinhaltet, die durch die Festphasenextraktionsplatte (60) fließen soll.

10. Festphasenextraktionssystem nach Anspruch 6, ferner Folgendes umfassend:
eine Dichtung, die eine Abdichtung zwischen dem Beckenverschluss und dem Becken bereitstellt, um das Auslaufen einer sich in dem Hohlraum befindenden Fluidprobe zu verhindern.

11. Festphasenextraktionssystem nach Anspruch 6, wobei:
der Beckenverschluss (70), wenn er mit dem Becken (50) verbunden ist, von der Festphasenextraktionsplatte (60) in dem Hohlraum durch einen Trennspalt (75) getrennt ist, der einen Fluidströmungsweg für eine Fluidprobe bereitstellt.

12. Verfahren zum Verwenden eines Festphasenextraktionssystems, Folgendes umfassend:
Einsetzen einer Festphasenextraktionsplatte in einen Hohlraum eines Beckens einer Haltevorrichtung für Festphasenextraktionsplatten, sodass die Festphasenextraktionsplatte gegen eine Seitenwand des Beckens drückt und eine Abdichtung mit der Seitenwand des Beckens gebildet wird, die eine Fluidprobe daran hindert, zwischen die Festphasenextraktionsplatte und die Seitenwand des Beckens zu fließen, **dadurch gekennzeichnet, dass** eine Außenabmessung der Festphasenextraktionsplatte größer ist als eine Innenlänge der Beckenwand und die Außenabmessung der Festphasenextraktionsplatte dann komprimiert wird, um einer Innenabmessung der Beckenwand zu entsprechen, sodass die Festphasenextraktionsplatte eine Presssitzabdichtung zwischen einer Außenkante der Festphasenextraktionsplatte entlang der Stärke der Festphasenextraktionsplatte und der Beckenwand bildet, ohne die Fläche der Festphasenextraktionsplatte zusammenzudrücken oder einzuklemmen.

13. Verfahren nach Anspruch 12, ferner Folgendes umfassend:
Zuführen der Fluidprobe auf die Festphasenextraktionsplatte innerhalb des Hohlraums, die durch die Festphasenextraktionsplatte zu einem Fluidauslass fließt, ohne zwischen die Festphasenextraktionsplatte und die Seitenwand des Beckens zu fließen.

14. Verfahren nach Anspruch 13, ferner Folgendes umfassend:
Zuführen eines Elutionsmittels auf die Festphasenextraktionsplatte innerhalb des Hohlraumes, das durch die Festphasenextraktionsplatte zu dem Fluidauslass fließt, ohne zwischen die Festphasenextraktionsplatte und die Seitenwand des Beckens zu fließen.

15. Verfahren nach Anspruch 12, ferner Folgendes umfassend:
mechanisches Verbinden eines Beckenverschlusses mit dem Becken;
Bilden einer Abdichtung zwischen dem Beckenverschluss und dem Becken; und
Anordnen eines Beckenverschlusses, wenn er mit dem Becken verbunden ist, sodass ein Trennspalt zwischen einer oberen Fläche der Festphasenextraktionsplatte und dem Beckenverschluss besteht und der Beckenverschluss die obere Fläche der Festphasenextraktionsplatte nicht berührt.

## Revendications

1. Système d'extraction de phase solide comprenant :
un disque d'extraction de phase solide (60) présentant une épaisseur ;
un appareil de support (45) de disque d'extraction de phase solide (60) ;
dans lequel l'appareil de support (45) de disque d'extraction de phase solide (60) comprend une cuvette (50) pourvu d'une cavité (52) permettant de recevoir le disque d'extraction de phase solide (60), la cavité (50) étant définie par une paroi inférieure et une paroi latérale adjacente du bassin, **caractérisé en ce qu'**une dimension de longueur externe du disque d'extraction de phase solide (60) est supérieure à une longueur interne de la paroi de la cuvette, et la dimension de longueur externe du disque d'extraction de phase solide (60) est ensuite comprimée jusqu'à ce qu'elle soit égale à une dimension de longueur interne de la paroi de la cuvette, de sorte que le disque d'extraction de phase solide (60) forme un joint à ajustement par pression entre un bord externe (62) du disque d'extraction de phase solide (60) le long de l'épaisseur du disque d'extraction de phase solide (60) et la paroi de la cuvette, sans pincer ni serrer la surface (64) du disque d'extraction de phase solide (60).

2. Système d'extraction de phase solide selon la revendication 1, dans lequel :
le disque d'extraction de phase solide (60) forme un joint avec la paroi latérale de la cuvette (50).

3. Système d'extraction de phase solide selon la revendication 1, dans lequel :
la cavité (52) de la cuvette forme un réservoir permettant de contenir un échantillon de fluide qui doit s'écouler à travers le disque d'extraction de phase solide (60) ; et
le joint empêche l'échantillon de fluide de s'écouler entre le disque d'extraction de phase solide (60) et la paroi latérale de la cavité (50).

4. Système d'extraction de phase solide selon la revendication 1, comprenant en outre :
un écran (55) situé entre le disque d'extraction de phase solide (60) et la paroi inférieure de la cavité (52).

5. Système d'extraction de phase solide selon la revendication 4, dans lequel :
la cuvette comporte un évidement (54) dans la paroi inférieure, permettant de recevoir l'écran (55).

6. Système d'extraction de phase solide selon la revendication 1, comprenant en outre :
un obturateur de cuvette (70) qui recouvre la cavité (52).

7. Système d'extraction de phase solide selon la revendication 6, dans lequel :
l'obturateur de cuvette (70) est relié mécaniquement à la cuvette (50).

8. Système d'extraction de phase solide selon la revendication 7, dans lequel :
l'obturateur de cuvette (70) est relié mécaniquement à la cuvette (50) par filetage.

9. Système d'extraction de phase solide selon la revendication 6, dans lequel :
l'obturateur de cuvette (70) comporte une entrée de fluide pour un échantillon de fluide qui doit s'écouler à travers le disque d'extraction de phase solide (60).

10. Système d'extraction de phase solide selon la revendication 6, comprenant en outre :
une bague qui fournit un joint entre l'obturateur de cuvette et la cuvette, afin d'empêcher la fuite d'un échantillon de fluide situé dans la cavité.

11. Système d'extraction de phase solide selon la revendication 6, dans lequel :
l'obturateur de cuvette (70), lorsqu'il est relié à la cuvette (50), est séparé du disque d'extraction de phase solide (60) dans la cavité par un espace de séparation (75) qui fournit un passage d'écoulement fluidique pour un échantillon de fluide.

12. Procédé d'utilisation d'un système d'extraction de phase solide, consistant à :
insérer un disque d'extraction de phase solide dans une cavité d'une cuvette d'un appareil de support de disque d'extraction de phase solide, de sorte que le disque d'extraction de phase solide se comprime contre une paroi latérale de la cuvette et qu'un joint est formé avec la paroi latérale du bassin, empêchant un échantillon de fluide de s'écouler entre le disque d'extraction de phase solide et la paroi latérale de la cuvette,
**caractérisé en ce qu'**une dimension de longueur externe du disque d'extraction de phase solide est supérieure à une longueur interne de la paroi de la cuvette, la dimension de longueur externe du disque d'extraction de phase solide étant ensuite comprimée jusqu'à ce qu'elle soit égale à une dimension de longueur interne de la paroi de la cuvette, de sorte que le disque d'extraction de phase solide forme un joint à ajustement par pression entre un bord externe du disque d'extraction de phase solide le long de l'épaisseur du disque d'extraction de phase solide et la paroi de la cuvette, sans pincer ni serrer la surface du disque d'extraction de phase solide.

13. Procédé selon la revendication 12, consistant en outre à :
introduire l'échantillon de fluide sur le disque d'extraction de phase solide à l'intérieur de la cavité, l'échantillon de fluide s'écoulant à travers le disque d'extraction de phase solide jusqu'à une sortie de fluide sans s'écouler entre le disque d'extraction de phase solide et la paroi latérale de la cuvette.

14. Procédé selon la revendication 13, consistant en outre à :
introduire un solvant d'élution sur le disque d'extraction de phase solide à l'intérieur de la cavité, le solvant d'élution s'écoulant à travers le disque d'extraction de phase solide jusqu'à la sortie de fluide sans s'écouler entre le disque d'extraction de phase solide et la paroi latérale de la cuvette.

15. Procédé selon la revendication 12, consistant en outre à :
relier mécaniquement un obturateur de cuvette à la cuvette ;
former un joint entre l'obturateur de cuvette et la cuvette ; et
disposer l'obturateur de cuvette, lorsque celui-ci est relié à la cuvette, de sorte qu'il existe un espace de séparation entre une surface supérieure du disque d'extraction de phase solide et l'obturateur de cuvette et que l'obturateur de cuvette ne vient pas en contact avec la surface supérieure du disque d'extraction de phase solide.
